## Europäisches Patentamt
## European Patent Office
## Office européen des brevets

(19)

(11) Veröffentlichungsnummer: **0 036 520**
**B1**

(12)

# EUROPÄISCHE PATENTSCHRIFT

(45) Veröffentlichungstag der Patentschrift:
**09.11.83**

(51) Int. Cl.³: **C 09 B 67/06,** F 26 B 7/00

(21) Anmeldenummer: **81101535.3**

(22) Anmeldetag: **04.03.81**

(54) **Verfahren zum Trocknen von feinteiligen Pigmenten.**

(30) Priorität: **13.03.80 DE 3009603**

(43) Veröffentlichungstag der Anmeldung:
**30.09.81 Patentblatt 81/39**

(45) Bekanntmachung des Hinweises auf die Patenterteilung:
**09.11.83 Patentblatt 83/45**

(84) Benannte Vertragsstaaten:
**CH DE FR GB IT LI**

(56) Entgegenhaltungen:
**FR - A - 2 084 915**
**GB - A - 1 160 987**

(73) Patentinhaber: **BASF Aktiengesellschaft,**
**Carl-Bosch-Strasse 38, D-6700 Ludwigshafen (DE)**

(72) Erfinder: **Graser, Fritz, Dr., Blieskasteler Strasse 17,**
**D-6700 Ludwigshafen (DE)**
Erfinder: **Wickenhaeuser, Gerhard, Dr., Roemerweg 8,**
**D-6701 Birkenheide (DE)**

## Verfahren zum Trocknen von feinteiligen Pigmenten

Die Erfindung betrifft ein Verfahren zum Trocknen von feinteiligen Pigmenten aus Flüssigkeiten enthaltenden Preßkuchen.

Pigmente fallen in der Regel bei der Herstellung oder bei der Überführung in die coloristisch wertvolle Pigmentform in Form von wäßrigen oder auch organische Lösungsmittel enthaltenden Preßkuchen (Filtergut) an. Bei der Trocknung des Filtergutes agglomerieren die feinen Pigmentteilchen. Das heißt, beim Trocknen werden die Pigmenteigenschaften des Pigments verschlechtert. Die getrockneten Produkte sind in vielen Fällen schwer zu dispergieren, da die Agglomerate bei der Anwendung wieder zerteilt werden müssen. Hierfür ist ein großer Aufwand an Zeit, Energie und Apparaten wie Dispergiergeräten erforderlich.

Um die Nachteile bei der Trocknung auszuschalten oder zu vermindern, werden den feuchten zu trocknenden Pigmenten Mittel zugegeben, die eine Agglomeration beim Trocknen verhindern sollen oder die eine leichte Redispergierung durch Benetzung der Agglomerate mit den Anwendungsmedien ermöglichen. Da diese sogenannten »Belegungsmittel« nicht mit allen anzuwendenden Medien verträglich sind, haben solche »belegten« Pigmente nur eine begrenzte Anwendung. Das hießt, für die unterschiedlichen Anwendungen sind jeweils verschieden belegte Pigmente erforderlich.

Ein Ziel der Entwicklung auf dem Pigmentgebiet ist es, Pigmentformen zu entwickeln, die leicht dispergierbar und universell anwendbar sind.

Aufgabe der vorliegenden Erfindung war es, ein Trockenverfahren bereitzustellen, nach dem universell anwendbare und leicht dispergierbare Pigmente aus Preßkuchen erhalten werden.

Es wurde gefunden, daß man feinteilige pulverförmige Pigmente aus Flüssigkeiten enthaltenden Preßkuchen oder Suspensionen erhält, wenn man ein Gemisch aus einem feinteiligen Pigment und einer Flüssigkeit, deren kritische Temperatur unterhalb der Zersetzungstemperatur des Pigments liegt, unter Druck auf Temperaturen oberhalb der kritischen Temperatur der Flüssigkeit erwärmt und dann entspannt, wobei die Temperatur stets oberhalb der Taulinie der Flüssigkeit gehalten wird.

Nach dem Verfahren gemäß der Erfindung erhält man feinteilige Pigmentpulver, die in Lacken, Druckfarben oder Kunststoffen leicht verteilbar sind und die farbstarke, brillante Färbungen liefern.

Das erfindungsgemäße Verfahren wird im allgemeinen so durchgeführt, daß man das Gemisch aus dem feinteiligen Pigment und der Flüssigkeit unter Druck, der oberhalb 80% des kritischen Drucks, vorzugsweise beim kritischen oder oberhalb des kritischen Drucks liegt, auf Temperaturen erwärmt, die oberhalb der kritischen Temperatur der verwendeten Flüssigkeit liegen. Das Gemisch wird dann isotherm im Behälter entspannt, wobei die Flüssigkeit als Gas entweicht und das pulverförmige Pigment im Druckbehälter zurückbleibt. Man kann aber auch so verfahren, daß das Gemisch mit Stickstoff aus dem Behälter herausgedrückt und über ein Ventil entspannt wird. Liegt das Gemisch unterhalb des kritischen Drucks und bei Temperaturen unterhalb der kritischen Temperatur vor, dann muß das Gemisch vor dem Entspannen auf mindestens 80% des kritischen Drucks, vorzugsweise auf den kritischen Druck oder darüber und isobar, z. B. in einem Durchlauferhitzer, auf überkritische Temperatur gebracht werden. Auf diese Weise ist die Temperaturbeanspruchung des Pigments besonders kurz und schonend. In diesen beiden Fällen muß die Temperatur im Gefäß bzw. im Durchlauferhitzer so hoch gewählt werden, daß beim Entspannen das Zweiphasengebiet (Taulinie) nicht erreicht wird. Die Flüssigkeit entweicht als Gas zusammen mit dem pulverförmigen Pigment, das durch ein Filter abgetrennt wird.

Als Pigmente kommen alle in organischen Lösungsmitteln und in Wasser schwer- bzw. unlöslichen Farbkörper, die zum Färben von Lacken, Druckfarben und/oder Kunststoffen verwendet werden können, in Betracht.

Als Pigmente sind die organischen bevorzugt, z. B. solche die sich vom Phthalocyanin, vom Chinacridon, vom Anthrachinon, von der Perylen-3,4,9,10-tetracarbonsäure, vom Perylen-3,4,9,10-tetracarbonsäurediimid, vom Chinophthalon, vom Indanthron, vom Violanthron, vom Flavanthron, vom Pyranthron, von Indigo und vom Thioindigo ableiten; außerdem Pigmente der Oxazin-, Isoindolenin- und Azo-Reihe.

Als Flüssigkeiten kommen Verbindungen in Betracht, die bei Normaldruck oder unter Druck flüssig sind und deren kritische Temperatur unterhalb der Zersetzungstemperatur des zu trocknenden Pigments liegt. Unter Zersetzungstemperatur des zu trocknenden Pigments werden im Falle der vorliegenden Erfindung Temperaturen verstanden, bei denen eine Schädigung der zu trocknenden Pigmentform eintritt.

Für den Fall, daß das Pigment in Form einer Suspension oder eines Preßkuchens mit einer nicht- oder schlechtgeeigneten Flüssigkeit ( = erste Flüssigkeit) vorliegt, deren kritische Temperatur oberhalb oder in der Nähe der maximal vom Pigment ohne Schädigung zu ertragenden Temperatur liegt, kann diese Flüssigkeit durch eine andere, besser geeignete, d. h. durch eine mit tieferliegender kritischer Temperatur, ausgetauscht werden. Hierzu kann die Pigmentsuspension bzw. der Preßkuchen mit der besser geeigneten Flüssigkeit ( = zweite Flüssigkeit) gemischt, das Pigment abgetrennt und mit der zweiten Flüssigkeit gewaschen werden. Für den Fall, erste und zweite Flüssigkeit sind miteinander nicht mischbar oder weisen Mischungslükken auf, besteht eine weitere Möglichkeit darin, daß die nicht geeignete Flüssigkeit nach dem Mischen mit der zweiten Flüssigkeit durch Phasentrennung abgetrennt wird. Gegebenenfalls muß dieser Vorgang wiederholt werden, bis die erste Flüssigkeit vollständig ausgetauscht ist. Der Austausch der Flüssigkeiten erfolgt in der Regel unter dem Dampfdruck der zweiten Flüssigkeit. Man kann auch so verfahren, daß man zum Verdrängen der nicht oder schlecht geeigneten Flüssigkeit die zweite Flüssigkeit bereits im überkritischen Zustand anwendet. Dies kann z. B. in einer entsprechenden Durchflußapparatur geschehen.

Als Flüssigkeiten kommen für das Verfahren gemäß der vorliegenden Erfindung z. B. $C_1$- bis $C_6$-Alkane, $C_2$- bis $C_6$-Alkene, $C_3$- bis $C_6$-Cycloalkane, $C_1$- bis $C_3$-Halogenalkane, wobei Halogen vorzugsweise Chlor und/oder Fluor ist, wie $C_1$- bis $C_3$-Chlor- oder Fluoralkane, Chlor-fluor-$C_1$- bis $C_2$-Alkane; Halogen-$C_2$-Alkene, wobei Halogen vorzugsweise Chlor und/oder Fluor ist, wie Chlor-, Fluor- und Chlorfluor-äthylen, aliphatische $C_2$- bis $C_5$-Äther, $C_1$- bis $C_4$-Alkylester der Ameisensäure, $C_1$- und $C_2$-Alkylester der Essigsäure, $C_3$- und $C_4$-Ketone, $C_1$- bis $C_3$-Alkanole, Mono-$C_1$- bis $C_4$-alkylamine, Di- und Tri-$C_1$- und $C_2$-alkylamine, Ammoniak, $CO_2$ und $SO_2$ in Betracht.

Im einzelnen sind außer den bereits bestimmt genannten z. B. zu nennen:

1) $C_1$- bis $C_6$-Alkane und -Alkene, Halogenalkane und Halogenalkene und $C_3$- bis $C_6$-Cycloalkane:
Methan, Äthan, Propan, Butan, Isobutan, Pentan, Hexan, Äthylen, Propylen, Butylen, Penten, Methylchlorid, Äthylchlorid, Propylchlorid, Methylenchlorid, Dichloräthan, Methylfluorid, Tetrafluormethan, Dichlordifluormethan, Dichlorfluormethan, Trichloräthylen, Trifluorchloräthylen, Trichlorfluormethan, Chlordifluormethan, Chlortrifluormethan, Cyclobutan, Cyclopentan, Cyclohexan.
2) Niedermolekulare Äther, Ester, Ketone und Alkohole:
Dimethyläther, Diäthyläther, Methylpropyläther, Äthylpropyläther, Methylformiat, Äthylformiat, Propylformiat, Butylformiat, Methylacetat, Äthylacetat, Aceton, Methyläthylketon, Methanol, Äthanol, Isopropanol.
3) Alkylamine:
Methylamin, Äthylamin, Propylamin, Butylamin, Isobutylamin, Dimethylamin, Trimethylamin, Diäthylamin und Triäthylamin.

Von den genannten Flüssigkeiten sind die $C_3$- bis $C_5$-Alkane, Methylchlorid, Äthylchlorid, Ammoniak, Methylamin, Äthylamin, Dimethylamin, Trimethylamin und $CO_2$ bevorzugt.

Beim erfindungsgemäßen Verfahren ist bei der Auswahl der zu verwendenden Flüssigkeiten darauf zu achten, daß die kritische Temperatur der Flüssigkeit unter, vorzugsweise deutlich, d. h. etwa 50°C, unter dem Zersetzungspunkt oder Abtrübungspunkt des Pigments liegt. Weiterhin ist zu berücksichtigen, daß bestimmte Pigmente mit einigen Flüssigkeiten reagieren können, z. B. Aminogruppen-tragende Pigmente mit Halogenalkylen oder Estern oder Pigmente mit Komplex-gebundenen Metallen oder aktivierten Halogenatomen mit Ammoniak oder Aminen. In diesen Fällen wird man Flüssigkeiten verwenden, die unter den Arbeitsbedingungen inert sind.

Das Verfahren gemäß der vorliegenden Erfindung kann auch mit der Rekristallisation des Pigments kombiniert werden, wenn man Flüssigkeiten verwendet, deren kritische Temperatur und chemisches Verhalten den soeben genannten Bedingungen entsprechen, und in denen eine Kristallisation der feinen Pigmentteilchen erfolgt. Die Rekristallisation, auch Formierung genannt, kann unter üblichen Bedingungen, d. h. deutlich unterhalb der kritischen Temperatur der Flüssigkeit oder auch im kritischen und überkritischen Bereich der Flüssigkeit erfolgen. Die Aufarbeitung und Isolierung der Pigmente erfolgt in der oben angegebenen Weise, wobei das Pigment getrocknet erhalten wird. Für diesen Fall sind als Flüssigkeiten $C_2$- bis $C_5$-Alkane, $C_5$- und $C_6$-Cycloalkane, $C_3$- bis $C_5$-Alkene, $C_1$- bis $C_3$-Halogenalkane, $C_2$-Halogenalkene, $C_2$- bis $C_5$-Äther, $C_1$- bis $C_4$-Alkylester der Ameisensäure, $C_1$- und $C_2$-Alkylester der Essigsäure, $C_3$- bis $C_4$-Ketone, $C_1$- bis $C_3$-Alkanole, $C_1$- bis $C_4$-primäre Alkylamine, Di- und Tri-$C_1$- und $C_2$-Alkylamine und Ammoniak geeignet. Besonders geeignet sind $C_3$- bis $C_5$-Alkane wie Propan, Butan, Pentan, Isobutan, Isopentan, $C_1$- und $C_2$-Halogenalkane, wie Methylchlorid, Äthylchlorid, Methylfluorid, Difluordichlormethan, Methylamin, Äthylamin, Dimethylamin, Triäthylamin, Ammoniak, ferner auch Dimethyläther.

Die folgenden Beispiele sollen das Verfahren zusätzlich erläutern. Die im folgenden angegebenen Teile und Prozentangaben beziehen sich auf das Gewicht. Die Volumenteile verhalten sich zu den Gewichtsteilen wie das ml zum g.

### Beispiel 1

112 Teile Hexadecachlorkupferphthalocyanin in Pigmentform (ber. trocken) (erhalten nach Beispiel 1 der DE-C 20 13 818) in Form einer Paste in Xylol (Gehalt: 35%) werden in einem 1000 Vol.-Teile enthaltenden Rührdruckbehälter bei 40°C und einem Druck von 80 bar mit 3500 Teilen Kohlendioxid gewaschen, bis alles Xylol verdrängt ist. Dann wird die Suspension auf 60°C erhitzt, wobei der Druck auf 120 bar begrenzt wird und bei konstanter Temperatur von 60°C entspannt. Das Pigment bleibt im Druckbehälter im getrockneten Zustand zurück. Man erhält in quantitativer Ausbeute ein Hexadecachlorkupferphthalocyaninpigment, das sehr leichtdispergierbar ist und farbstarke Färbungen liefert.

Das beim Waschen anfallende Xylol-Kohlendioxid-Gemisch wird bei 80 bar auf 80°C erwärmt, wobei es in 2 Phasen zerfällt. Die Xylol enthaltende Phase wird über einen Phasenscheider abgetrennt und ausgeschleust. Die Kohlendioxidphase kann zum Waschen des Xylol enthaltenden Pigments wiederverwendet werden.

Verfährt man wie oben beschrieben, wäscht aber die xylolhaltige Paste (Farbstoffgehalt von 43%) statt bei 40°C und 80 bar bei 60°C und 120 bar mit 1500 Teilen Kohlendioxid, so erhält man ein Pigment mit ganz ähnlichen Eigenschaften.

### Beispiel 2

168 Teile N,N-Dimethyl-perylen-3,4,9,10-tetracarbonsäure-diimid-pigment (ber. trocken) in Form des wasserfeuchten Filterkuchens (Gehalt: 28% an Pigment) — hergestellt durch Methylierung von Perylen-3,4,9,10-tetracarbonsäurediimid in wäßrig alkalischem Medium mit Methylchlorid, gemäß DE-A 27 27 484, Beispiel 1a — wird bei 8 bar und 20°C mit 760 Teilen flüssigem Ammoniak in einem Hochdruckrohr von 700 Volumenteilen Inhalt und versehen mit einer Stahlfritte gewaschen. Nachdem das Wasser vollständig durch Ammoniak verdrängt ist, wird das Gemisch bei einem konstanten Druck von 120 bar, der mit Stickstoff eingestellt wird, in einem Durchlauferhitzer kurzzeitig auf 140°C erwärmt und über ein Drosselventil entspannt. Das Pigment wird mittels eines Filters vom gasförmigen Ammoniak getrennt und isoliert. Das erhaltene, getrocknete Pigment ist frei von desaggregierend wirkenden Belegungsmitteln und ist in Lacken sehr leicht dispergierbar.

### Beispiel 3

a) 39 Teile Perylen-3,4,9,10-tetracarbonsäure-diimid als Mahlgut, das nach den Angaben im letzten Absatz erhalten wurde, wird in einem 1000 Volumenteile enthaltenden Rührdruckgefäß mit 400 Teilen Ammoniak 4 Stunden bei 60°C unter einem Druck von 55 bar gerührt. Dann wird durch Aufdrücken von Stickstoff der Druck auf 140 bar angehoben und die Suspension in einem Durchlauferhitzer kurzzeitig auf 160°C bei konstantem Druck von 140 bar erwärmt und sofort über ein Drosselventil entspannt. Das Pigment wird mit Hilfe eines Filters vom gasförmigen Ammoniak abgetrennt und isoliert. Man erhält ein feinkristallines, pulverförmiges Pigment.

b) Das als Ausgangsstoff verwendete Perylen-3,4,9,10-tetracarbonsäurediimid wurde durch Mahlen des Rohproduktes in einer Schwingmühle in Abwesenheit von Mahlhilfsmitteln erhalten (Dauer: 24 h). Das Mahlgut besteht aus 2 bis 150 μm großen Agglomeraten, die aus Primärteilchen von

<0,2 μm aufgebaut sind.

### Beispiel 4

a) 70 Teile feingemahlenes Kupferphthalocyanin, das nach den Angaben unter b) erhalten wurde, wird in einem 1000 Volumenteile enthaltenden Rührdruckbehälter mit 335 Teilen Propan 4 Stunden bei 100°C und 70 bar gemischt. Das Gemisch wird in einem Durchlauferhitzer bei konstantem Druck von 70 bar, der mit Stickstoff eingestellt wird, kurzzeitig auf 135°C erhitzt und sofort über ein Drosselventil entspannt. Das Kupferphthalocyanin wird durch ein Filter vom gasförmigen Propan abgetrennt und isoliert.

Man erhält in quantitativer Ausbeute ein sehr feinteiliges Kupferphthalocyaninpigment der β-Modifikation, das farbstarke Färbungen in brillanten Tönen liefert. Das Pigment ist in Lacken und Druckfarben leicht verteilbar.

b) Rohes Kupferphthalocyanin wurde in einer Kugelmühle 30 Stunden in Abwesenheit von Mahlhilfsmitteln gemahlen. Das Mahlgut besteht aus 2 bis 200 μm großen Agglomeraten, die aus Primärteilchen von <0,1 μm aufgebaut sind.

### Beispiel 5

79 Teile Indanthronpigment (ber. trocken) in Form des wäßrigen Preßkuchens (Gehalt: 24,4%) (erhalten nach Beispiel 1 der DE-A-2 705 107) werden bei 10 bar und 8°C mit 1900 Teilen flüssigem Ammoniak in einem mit einer Stahlfritte versehenen Hochdruckrohr gewaschen, bis das Wasser durch Ammoniak vollständig verdrängt ist. Die Ammoniak-Suspension wird dann auf 140°C erwärmt, wobei der Druck auf 120 bar begrenzt wird. Anschließend wird bei konstanter Temperatur entspannt. Im Druckbehälter verbleibt in quantitativer Ausbeute ein leicht verteilbares Indanthronpigment, das in Lacken sehr leicht dispergierbar ist.

### Beispiel 6

435 Teile Kupferphthalocyaninpigment der β-Modifikation (ber. trocken), das in Isobutanol in die Pigmentform überführt worden ist, in Form des 63%igen butanolfeuchten Preßkuchens, werden in einem Rührdruckbehälter bei 60°C und 120 bar mit 2000 Teilen Kohlendioxid gewaschen. Nachdem das Isobutanol verdrängt ist, wird das Gemisch bei 60°C und konstantem Druck von 120 bar durch ein Drosselventil gedrückt und entspannt. Das getrocknete Pigment wird mit Hilfe eines Filters abgetrennt und isoliert.

Man isoliert in quantitativer Ausbeute ein farbstarkes Pigment, das sehr gut dispergierbar ist.

### Beispiel 7

47,4 Teile (ber. trocken) des Azopigments aus 2-(3-Phenyloxdiazolyl-1.2.4)-anilin und 2,6-Dihydroxy-3-cyan-4-methylpyridin gemäß DE-B-2 457 687, Beispiel 1, in Form eines 15,8%igen wäßrigen Teiges, werden unter Normaldruck auf einer Nutsche mit Isobutanol wasserfrei gewaschen. Der isobutanolfeuchte Filterkuchen wird in einem Hochdruckrohr, versehen mit einer Stahlfritte, bei 8° C und 60 bar Druck mit 3000 Teilen flüssigem Kohlendioxid frei von Isobutanol gewaschen. Die Suspension in Kohlendioxid wird auf 60° C erhitzt und der Druck auf 120 bar begrenzt. Bei konstanter Temperatur von 60° C wird über ein Drosselventil entspannt. Mit quantitativer Ausbeute wird ein kornweiches Pigment erhalten, das in Benzintiefdruckfarbe eine sehr gute Dispergierbarkeit aufweist.

### Beispiel 8

104 Teile N,N-Dimethyl-perylen-3,4,9,10-tetracarbonsäurediimidpigment (ber. trocken) in Form des wasserfeuchten Filterkuchens (mit einem Pigmentgehalt von 28%) — hergestellt durch Methylierung von Perylen-3,4,9,10-tetracarbonsäurediimid in wäßrig alkalischem Medium mit Methylchlorid, gemäß DE-A-2 727 484, Beispiel 1a — wird über eine Nutsche mit Isobutanol wasserfrei gewaschen. Der isobutanolfeuchte Filterkuchen wird in einem Hochdruckrohr von 700 Volumenteilen Inhalt und versehen mit einer Stahlfritte bei 7° C und 60 bar mit 3000 Teilen flüssigem Kohlendioxid frei von Isobutanol gewaschen. Die Suspension in Kohlendioxid wird wie in Beispiel 7 beschrieben weiter behandelt. Man erhält in quantitativer Ausbeute ein reines unbelegtes Pigment, das in seiner Dispergierbarkeit dem Farbstoff des Beispiels 2 entspricht.

### Beispiel 9

190 Teile Kupferphthalocyaninpigment der β-Modifikation (ber. trocken), das in einem Isobutanol/Wasser-Gemisch in die Pigmentform überführt worden ist und in Form eines 63%igen butanolfeuchten Preßkuchens vorliegt, werden bei 8 bis 10° C und 10 bis 12 bar mit 4000 Teilen flüssigem Ammoniak in einem mit einer Stahlfritte versehenen Hochdruckrohr gewaschen, bis das Isobutanol und die im Isobutanol enthaltenen Wasserreste vollständig durch Ammoniak verdrängt sind. Das Pigment-Ammoniak-Gemisch wird dann auf 140° C erwärmt, wobei der Druck auf 120 bar begrenzt wird. Anschließend wird bei konstanter Temperatur entspannt. Im Druckbehälter verbleibt in quantitativer Ausbeute ein farbstarkes Kupferphthalocyaninpigment, das sehr gut dispergierbar ist.

### Beispiel 10

Man verfährt wie in Beispiel 9, verwendet aber statt 190 Teile 128 Teile Kupferphthalocyanin (ber. trocken) und wäscht statt bei 8 bis 10° C und 10 bis 12 bar bei 60° C und 120 bar mit 1800 Teilen Ammoniak. In quantitativer Ausbeute erhält man ein farbstarkes, sehr gut dispergierbares Kupferphthalocyaninpigment, das in seinen Eigenschaften praktisch dem nach Beispiel 9 erhaltenen entspricht.

### Beispiel 11

132 Teile Hexadecachlorkupferphthalocyanin in Pigmentform (ber. trocken) (erhalten nach Beispiel 1 der DE-C 20 13 818) in Form einer scharf abgesaugten Paste in Xylol (Pigmentgehalt: 46,3%) werden in einem mit einer Stahlfritte versehenen Hochdruckrohr mit einem Volumen von etwa 700 Vol.-Teilen bei 10° C und 60 bar mit 2800 Teilen flüssigem Kohlendioxid gewaschen bis alles Xylol verdrängt ist. Dann wird die Suspension auf 60° C erhitzt, wobei der Druck auf 120 bar begrenzt wird und das Gemisch bei konstanter Temperatur von 60° C entspannt. Das Pigment bleibt im Druckrohr im getrockneten Zustand zurück. Man erhält in quantitativer Ausbeute ein Hexadecachlorkupferphthalocyaninpigment, das sehr leicht dispergierbar ist und farbstarke Färbungen liefert.

Das anfallende Xylol-Kohlendioxid-Gemisch wird, wie in Beispiel 1, Absatz 3 beschrieben, aufgearbeitet.

### Beispiel 12

70 Teile feingemahlenes Kupferphthalocyanin (hergestellt nach Beispiel 4b) wird in einem 1200 Volumenteile enthaltenden Rührdruckbehälter bei Normaltemperatur mit 420 Teilen flüssigem Ammoniak (ca. 12 bar) gemischt, dann in etwa 15 Minuten auf 120° C erhitzt und 4 Stunden bei 100 bar gerührt. Anschließend wird das Gemisch mit Stickstoff von 100 bar durch einen Durchlauferhitzer gedrückt, dabei bei konstantem Druck kurzzeitig auf 140° C erhitzt und sofort über ein Drosselventil entspannt. Das Kupferphthalocyanin wird durch einen Filter vom gasförmigen Ammoniak abgetrennt und isoliert.

Man erhält in sehr guter Ausbeute ein sehr feinteiliges Kupferphthalocyaninpigment, das farbstarke Färbungen in brillanten Tönen liefert und sich in Lacken leicht verteilen läßt.

### Beispiel 13

70 Teile feingemahlenes Kupferphthalocyanin (hergestellt nach Beispiel 4b) werden in einem 1200 Vol.-Teile enthaltenden Rührdruckbehälter bei 20°C mit 420 Teilen flüssigem Methylchlorid (ca. 9 bar) gemischt, dann innerhalb von etwa 15 Minuten auf 150 bis 155°C erhitzt, wobei sich ein Druck von 78 bar einstellt, und 30 Minuten bei 150 bis 155°C gerührt. Anschließend wird das Gemisch mit Stickstoff durch ein Drosselventil gedrückt und dabei entspannt. Das Kupferphthalocyanin wird durch einen Filter von gasförmigem Methylchlorid abgetrennt und isoliert. Man erhält in ausgezeichneter Ausbeute ein sehr feinteiliges Kupferphthalocyaninpigment, das farbstarke Färbungen in brillanten Tönen liefert und in Lacken, Druckfarben und Kunststoffen leicht verteilbar ist.

Das Methylchlorid läßt sich nach Verflüssigung wieder verwenden.

### Beispiel 14

70 Teile feingemahlenes Kupferphthalocyanin (erhalten nach Beispiel 4b) werden in einem 1200 Vol.-Teile enthaltenden Rührdruckbehälter bei 20°C mit 420 Teilen flüssigem Äthylchlorid (ca. 5 bar) gemischt, dann innerhalb von etwa 10 Minuten auf 100°C erhitzt, wobei sich ein Druck von 12 bar einstellt und 15 Minuten bei 100°C gerührt. Anschließend wird der Druck mit Stickstoff auf 70 bar eingestellt und das Gemisch bei konstantem Druck von 70 bar durch einen Durchlauferhitzer gedrückt, in dem es kurzzeitig auf 220°C erhitzt wird, und über ein Drosselventil entspannt. Das Kupferphthalocyanin wird durch einen Filter vom gasförmigen Äthylchlorid abgetrennt und isoliert. Man erhält in ausgezeichneter Ausbeute ein sehr feinteiliges Kupferphthalocyaninpigment, das farbstarke Färbungen in brillanten Tönen liefert und das sehr gut dispergierbar ist.

Das Äthylchlorid läßt sich nach Verflüssigung wieder verwenden.

### Beispiel 15

70 Teile feingemahlenes Kupferphthalocyanin (erhalten nach Beispiel 4b) werden in einem 1200 Vol.-Teile enthaltenden Rührdruckbehälter bei 20°C mit 420 Teilen flüssigem Propan (ca. 18 bar) gemischt, dann innerhalb von etwa 15 Minuten auf 135°C erhitzt, wobei sich ein Druck von 105 bar einstellt, und 30 Minuten bei 135°C gerührt. Anschließend wird das Gemisch mit Stickstoff bei 105 bar und 135°C durch ein Drosselventil gedrückt und dabei entspannt. Das Kupferphthalocyanin wird durch einen Filter vom gasförmigen Propan abgetrennt und isoliert.

Man erhält in ausgezeichneter Ausbeute ein sehr feinteiliges Kupferphthalocyaninpigment, das farbstarke Färbungen in brillanten Tönen liefert und das sehr gut dispergierbar ist.

### Beispiel 16

132 Teile Hexadecachlorkupferphthalocyanin in Pigmentform (erhalten nach Beispiel 1 der DE-C 20 13 818) in Form einer scharf abgesaugten Paste in Xylol (Pigmentgehalt: 46,3%) werden in einem mit einer Stahlfritte versehenen Hochdruckrohr mit einem Volumen von etwa 700 Vol.-Teilen bei 10°C und 50 bar mit 3000 Teilen Äthan gewaschen, bis alles Xylol entfernt ist. Dann wird das Äthan-Pigment-Gemisch auf 50°C erwärmt, wobei der Druck auf 60 bar begrenzt wird, und bei konstanter Temperatur von 50°C entspannt. Das Pigment bleibt im Druckrohr im getrockneten Zustand zurück. Man erhält in quantitativer Ausbeute ein Hexadecachlorkupferphthalocyaninpigment, das sehr leicht dispergierbar ist und das farbstarke Färbungen liefert.

### Beispiel 17

Verfährt man wie in Beispiel 13 beschrieben, verwendet aber statt 70 Teile 140 Teile feingemahlenes Kupferphthalocyanin, so erhält man ebenfalls in ausgezeichneter Ausbeute ein Kupferphthalocyaninpigment, das reine und farbstarke Färbungen liefert und das sehr gut dispergierbar ist.

### Beispiel 18

70 Teile Perylen-3,4,9,10-tetracarbonsäure-bis-(4-phenyl-azoanilid) (hergestellt nach DE-C-1 257 096, Beispiel 1a; das Rohprodukt wurde aus konz. Schwefelsäure umgelöst, die Fällung abfiltriert, neutral gewaschen und getrocknet) werden in 420 Teilen Äthylchlorid in einem Rührdruckgefäß (1200 Volumenteile) bei 20°C und 5 bar gemischt und während 30 Minuten auf 180°C erhitzt, wobei sich ein Druck von etwa 52 bar ausbildet, und 4 Stunden bei dieser Temperatur gehalten. Anschließend wird das Gemisch mit Stickstoff auf einen Druck von 70 bar gebracht und beim konstanten Druck durch einen Durchlauferhitzer gedrückt, in dem es kurzzeitig auf 200°C erhitzt wird, und über ein Drosselventil langsam entspannt. Man erhält in sehr guter Ausbeute ein sehr feinteiliges Perylenpigment, das rote Einbrennlackierungen mit guter Farbstärke und sehr guter Deckkraft ergibt und das ausgezeichnet verteilbar ist.

### Beispiel 19

a) Verfährt man wie in Beispiel 18 beschrieben, verwendet aber statt des Perylentetracarbonsäure-bis-phenylazoanilids 70 Teile feingemahlenes Pyranthron (hergestellt nach b)), so erhält man in sehr guter Ausbeute ein feinteiliges, gut verteilbares Pyranthronpigment, das farbstarke, reine, rotstichig gelbe Einbrennlackierungen liefert.

b) Rohes Pyranthron, hergestellt nach der DE-B-2 115 131, Beispiel 28, wird in einer Planetenkugelmühle in Abwesenheit von Mahlhilfsmitteln 8 Stunden gemahlen. Das Mahlgut besteht aus 1 bis 100 μm großen Agglomeraten, die aus Primärteilchen von <0,2 μm aufgebaut sind.

### Beispiel 20

a) Man verfährt wie im Beispiel 18, verwendet aber statt des Perylentetracarbonsäure-bis-phenylazoanilids 70 Teile freigemahlenes Chinophthalon, das nach den Angaben unter b) erhalten worden ist. In sehr guter Ausbeute erhält man ein feinteiliges, sehr gut verteilbares Chinophthalonpigment, das farbstarke, reine, grünstichig gelbe Einbrennlackierungen mit hoher Deckkraft ergibt.

b) Rohes 8-(Tetrachlorphthalimido)-tetrachlorchinophthalon), hergestellt gemäß DE-B-1 770 960, Beispiel 1, wird in einer Kugelmühle 30 Stunden ohne Zusatz an Mahlhilfsmitteln gemahlen. Man erhält ein Mahlgut, das aus 1 bis 20 μm großen Agglomeraten, die aus Primärteilchen von <0,1 μm aufgebaut sind, besteht.

### Beispiel 21

70 Teile feingemahlenes Chinophthalon (hergestellt nach Beispiel 20b) werden in einem Rührdruckgefäß (1200 Vol.-Teile Inhalt) in 420 Teilen n-Pentan bei 20°C gerührt während 30 Minuten unter Rühren auf 180 bis 185°C erhitzt, wobei sich ein Druck von etwa 30 bar einstellt und 4 Std. bei dieser Temperatur gehalten. Anschließend wird das Gemisch mit Stickstoff auf einen Druck von 40 bar gebracht und bei konstantem Druck durch einen Durchlauferhitzer gedrückt, in dem es kurzzeitig auf 210°C erhitzt wird, und über ein Drosselventil langsam entspannt. Man erhält in sehr guter Ausbeute ein feinteiliges, sehr gut verteilbares Chinophthalonpigment, das farbstarke, reine, grünstichig gelbe Einbrennlackierungen mit hoher Deckkraft liefert.

### Beispiel 22

125 Teile Kupferphthalocyaninpigment der β-Modifikation (das Pigment wurde durch Rekristallisation des feinteiligen Rohpigments in einem Isobutanol/Wasser-Gemisch erhalten) in Form des feuchten Preßkuchens (Pigmentgehalt: 63%) werden in einem mit einer Stahlfritte versehenen Hochdruckrohr (Inhalt: 700 Volumenteile) bei 20 bis 25°C und einem Druck von 55 bis 60 bar mit 2000 Teilen flüssigem Trimethylamin gewaschen, bis das Isobutanol und vorhandene Wasserreste vollständig verdrängt sind. Das Gemisch wird dann innerhalb von etwa 1,5 Stunden auf 170°C erhitzt, wobei der Druck auf 60 bar begrenzt wird. Anschließend wird bei konstanter Temperatur von 170 bis 172°C entspannt. Im Druckrohr verbleibt in quantitativer Ausbeute ein farbstarkes Kupferphthalocyaninpigment, das sehr gut dispergierbar ist.

### Patentansprüche

1. Verfahren zum Trocknen von feinteiligen Pigmenten aus Flüssigkeiten enthaltenden Preßkuchen oder Suspensionen, dadurch gekennzeichnet, daß man ein Gemisch aus einem feinteiligen Pigment und einer Flüssigkeit, deren kritische Temperatur unterhalb der Zersetzungstemperatur des Pigments liegt, unter Druck auf Temperaturen oberhalb der kritischen Temperatur der Flüssigkeit erwärmt und dann entspannt, wobei die Temperatur stets oberhalb der Taulinie der Flüssigkeit gehalten wird.

2. Verfahren gemäß Anspruch 1, dadurch gekennzeichnet, daß man zunächst die in dem Preßkuchen enthaltene Flüssigkeit durch eine zweite Flüssigkeit, deren kritische Temperatur unterhalb der Zersetzungstemperatur des Pigments liegt, verdrängt.

3. Verfahren gemäß Anspruch 1 oder 2, dadurch gekennzeichnet, daß man als Flüssigkeit $C_1$- bis $C_6$-Alkane, $C_2$- bis $C_6$-Alkene, $C_3$- bis $C_6$-Cycloalkane, Halogen-$C_1$- bis $C_3$-Alkane, Halogen-$C_2$-Alkene, aliphatische $C_2$- bis $C_5$-Äther, $C_1$- bis $C_4$-Alkylester der Ameisensäure, $C_1$- oder $C_2$-Alkylester der Essigsäure, $C_3$- oder $C_4$-Ketone, $C_1$- bis $C_3$-Alkanole, Mono-$C_1$- bis $C_4$-alkylamine, Di- oder Tri-$C_1$- oder -$C_2$-alkylamine, Ammoniak, Kohlendioxid oder Schwefeldioxid verwendet.

4. Verfahren nach Anspruch 1 oder 2, dadurch gekennzeichnet, daß man als Flüssigkeit $C_3$- bis $C_5$-Alkane, Methylchlorid, Äthylchlorid, Ammoniak, Methylamin, Äthylamin, Dimethylamin, Trimethylamin oder Kohlendioxid verwendet.

5. Verfahren gemäß den Ansprüchen 1 bis 4, dadurch gekennzeichnet, daß man das feinteilige Rohpigment zuerst in der Flüssigkeit unter Druck unterhalb bis oberhalb der kritischen Temperatur der Flüssigkeit rekristallisiert, dann das Pigment unter überkritischen Bedingungen trocknet und isoliert.

6. Verfahren gemäß Anspruch 5, dadurch gekennzeichnet, daß man als Flüssigkeit $C_3$- bis $C_5$-Alkane, Halogen-$C_1$- oder -$C_2$-alkane, Methylamin, Äthylamin, Dimethylamin, Trimethylamin, Triäthylamin, Ammoniak oder flüssiges Kohlendioxid verwendet.

7. Verfahren gemäß den Ansprüchen 1 bis 6, dadurch gekennzeichnet, daß man das Gemisch aus dem feinteiligen Pigment und der Flüssigkeit unter einem Druck, der oberhalb 80% des kritischen Drucks liegt, auf oberhalb der kritischen Temperatur der verwendeten Flüssigkeit erwärmt und dann entspannt.

8. Verfahren gemäß Anspruch 7, dadurch gekennzeichnet, daß man das Gemisch aus dem feinteiligen Pigment und der Flüssigkeit unter Druck, der beim kritischen Druck oder oberhalb des kritischen Drucks liegt, auf oberhalb der kritischen Temperatur der verwendeten Flüssigkeit erwärmt und dann entspannt.

### Claims

1. A process for drying a finely divided pigment which is in the form of a press cake containing a liquid, or in the form of a suspension, wherein a mixture of a finely divided pigment and a liquid whose critical temperature is below the decomposition temperature of the pigment is heated under pressure to above the critical temperature of the liquid and is then released, whilst keeping the temperature at all times at all times above the dew line of the liquid.

2. A process as claimed in claim 1, wherein the liquid contained in the press cake is first of all displaced by a second liquid whose critical temperature is below the decomposition temperature of the pigment.

3. A process as claimed in claim 1 or 2, wherein the liquid used is a $C_1-C_6$-alkane, a $C_2-C_6$-alkene, a $C_3-C_6$-cycloalkane, a halo-$C_1-C_3$-alkane, a halo-$C_2$-alkene, an aliphatic $C_2-C_5$-ether, a $C_1-C_4$-alkyl formate, a $C_1$- or $C_2$-alkyl acetate, a $C_3$- or $C_4$-ketone, a $C_1-C_3$-alkanol, a mono-$C_1-C_4$-alkylamine, a di-$C_1$- or -$C_2$-alkylamine, a tri-$C_1$- or -$C_2$-alkylamine, ammonia, carbon dioxide or sulfur dioxide.

4. A process as claimed in claim 1 to 2, wherein the liquid used is a $C_3-C_5$-alkane, methyl chloride, ethyl chloride, ammonia, methylamine, ethylamine, dimethylamine, trimethylamine or carbon dioxide.

5. A process as claimed in claims 1 to 4, wherein the finely divided crude pigment is first recrystallized in the liquid under pressure, below, at or above the critical temperature of the liquid, and the pigment is then dried under supercritical conditions, and isolated.

6. A process as claimed in claim 5, wherein the liquid used is a $C_3-C_5$-alkane, a halo-$C_1$- or -$C_2$-alkane, methylamine, ethylamine, dimethylamine, trimethylamine, triethylamine, ammonia or liquid carbon dioxide.

7. A process as claimed in claims 1 to 6, wherein the mixture of the finely divided pigment and the liquid is heated uner a pressure which is above 80% of the critical pressure, to above the critical temperature of the liquid used, ans is then released.

8. A process as claimed in claim 7, wherein the mixture of the finely divided pigment and the liquid is heated, under a pressure which is equal to or above the critical pressure, to above the critical temperature of the liquid used, and is then released.

### Revendications

1. Procédé pour le séchage de pigments en fines particules, à partir de tourteaux qui contiennent des liquides, caractérisé en ce qu'on chauffe sous pression, à une température supérieure à la température critique du liquide, un mélange d'un pigment finement divisé et d'un liquide dont la température critique se situe au-dessous de la température de décomposition du pigment, puis on détend le mélange, la température étant toujours maintenue au-dessus de la courbe de condensation du liquide.

2. Procédé selon la revendication 1, caractérisé en ce qu'on commence par déplacer le liquide contenu dans le tourteau par un second liquide dont la température critique se situe au-dessous de la température de décomposition du pigment.

3. Procédé selon la revendication 1 ou 2, caractérisé en ce qu'on utilise, en tant que liquide, des alcanes en $C_1$ à $C_6$, des alcènes en $C_2$ à $C_6$, des cycloalcanes en $C_3$ à $C_6$, des alcanes en $C_1$ à $C_3$ halogénés, des alcènes en $C_2$ halogénés, des éthers aliphatiques en $C_2$ à $C_5$, des formiates d'alcoyles en $C_1$ à $C_4$, des acétates d'alcoyles en $C_1$ ou $C_2$, des cétones en $C_3$ ou $C_4$, des alcanols en $C_1$ à $C_3$, des monoalcoylamines en $C_1$ à $C_4$, des di- ou trialcoylamines en $C_1$ ou $C_2$, l'ammoniac, l'anhydride carbonique ou l'anhydride sulfureux.

4. Procédé selon la revendication 1 ou 2, caractérisé en ce qu'on utilise, en tant que liquide, des alcanes en $C_3$ à $C_5$, le chlorure de méthyle, le chlorure d'éthyle, l'ammoniac, la méthylamine, l'éthylamine, la diméthylamine, la triméthylamine ou l'anhydride carbonique.

5. Procédé selon l'une quelconque des revendications 1 à 4, caractérisé en ce qu'on recristallise tout d'abord le pigment brut finement divisé dans le liquide, sous pression et au-dessous à au-dessus de la température critique du liquide, puis on sèche le pigment dans des conditions surcritiques et on l'isole.

6. Procédé selon la revendication 5, caractérisé en ce qu'on utilise, en tant que liquide, des alcanes en $C_3$ à $C_5$, des alcanes en $C_1$ ou $C_2$ halogénés, la méthylamine, l'éthylamine, la diméthylamine, la triméthylamine, la triéthylamine, l'ammoniac ou l'anhydride carbonique liquide.

7. Procédé selon l'une quelconque des revendications 1 à 6, caractérisé en ce qu'on chauffe le mélange du pigment finement divisé et du liquide sous une pression qui se situe au-dessus de 80% de la pression critique, à une température supérieure à la température critique du liquide utilisé, puis on le détend.

8. Procédé selon la revendication 7, caractérisé en ce qu'on chauffe le mélange du pigment finement divisé et du liquid sous une pression qui se situe à la pression critique ou au-dessus de celle-ci, à une température supérieure à la température critique du liquide utilisé, puis on le détend.